# EUROPEAN PATENT APPLICATION

(11) **EP 2 905 651 A1**
(43) Date of publication of application: **12.08.2015**
(21) Application number: 14835683.5
(22) Date of filing: 27.05.2014
(51) Int. Cl.: G02F 1/1335, G02F 1/1339

(54) **DUAL-VIEW FIELD DISPLAY PANEL AND MANUFACTURING METHOD THEREFOR, AND DISPLAY DEVICE**

(30) Priority: 21.10.2013 CN 201310495381
(71) Applicant: BOE Technology Group Co., Ltd., Beijing 100015 (CN)
(72) Inventor: LIN, Chiachiang, Beijing 100176 (CN); WU, Yanbing, Beijing 100176 (CN)
(74) Representative: Michalski Hüttermann & Partner Patentanwälte mbB
(86) International application number: PCT/CN2014/078509
(87) International publication number: WO 2015/058524

(57) **Abstract**

The present invention discloses a dual view field display panel, a method for manufacturing the same, and a display device. A grating structure used for achieving dual view filed display is provided on a first substrate at a side which faces towards a second substrate, i.e., the grating structure is provided between the first and second substrates. As compared with an existing method in which it needs to attach a grating structure to a resultant liquid crystal display panel including the first substrate and the second substrate, the method for manufacturing a dual view field display panel according to the present invention saves a process for grating attachment and a thinning treatment performed on the first substrate. Thus, the manufacturing procedure of the dual view field display panel is simplified, and the difficulty in the process of manufacturing the dual view field display panel is reduced significantly.

## Description

### FIELD OF THE INVENTION

The present invention relates to the field of display technology, in particular, relates to a dual view field display panel, a method for manufacturing the same, and a display device.

### BACKGROUND OF THE INVENTION

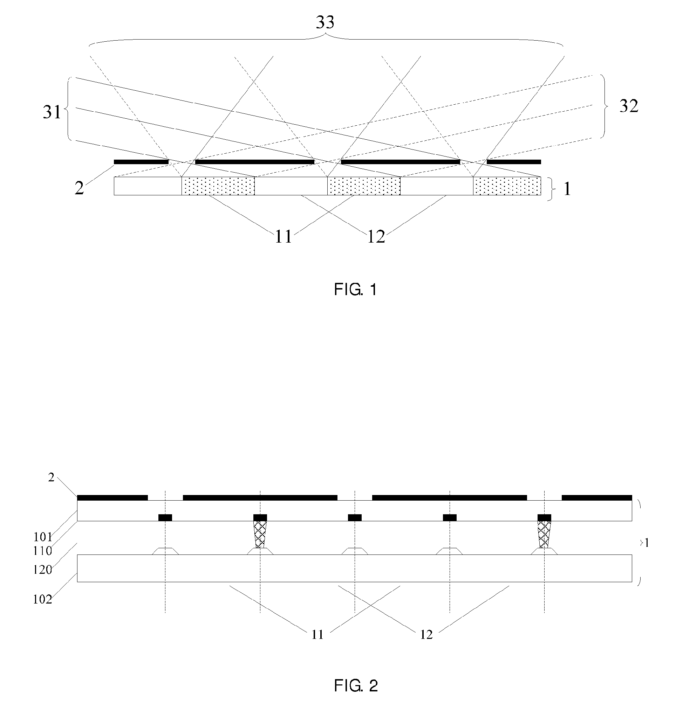

A dual view field display technology refers to a display technology in which different images can be viewed at two sides (e.g., a left view region 31 and a right view region 32 as shown in Fig. 1) of one display screen.

An existing dual view field display technology is mainly achieved by attaching a grating to an outer side of a liquid crystal display panel. As shown in Fig. 1, a slit grating 2 is arranged in front of a liquid crystal display panel 1, and includes light shading regions and light transmissive regions which are arranged alternately. The slit grating 2 functions as follows: only a part of display regions (including a plurality of first display regions 11) of the liquid crystal display panel 1 can be viewed in the left view region 31 which is at the left side of the screen; only another part of display regions (including a plurality of second display regions 12) of the liquid crystal display panel 1 can be viewed in the right view region 32 which is at the right side of the screen; and there is a crosstalk region 33 between the left view region 31 and the right view region 32 (both the first display regions 11 and the second display regions 12 can be viewed in the crosstalk region 33); wherein, the first display regions 11 and the second display regions 12 are arranged alternately, and correspond to a plurality of display units of the liquid crystal display panel 1, respectively, thereby achieving dual view field display.

Nowadays, the slit grating which implements the dual view field display is always attached to the outer side of the liquid crystal display panel, wherein there is a certain error in the attachment process. Since a slight deviation between a position of the slit grating and a position of the liquid crystal display panel will have an influence on an effect of the dual view field display, it is necessary to ensure that the error is controlled to be within a certain range, which will increase difficulty in the process of manufacturing the dual view field display panel. For example, by taking the attachment of the slit grating 2 to the outer side of the liquid crystal display panel as shown in Fig. 2 as an example, it is necessary to perform a thinning treatment on a first substrate 101 (which is generally made of a glass material) of the liquid crystal display panel in a practical operation so that the first substrate 101 will be thinned down to about one hundred microns or several tens of microns, in order to control a light ray outgoing from the slit grating 2 to have a large angle relative to the normal line of the slit grating, so as to ensure that the left view region 31 and the right view region 32 have large ranges. The thinning treatment performed on the first substrate 101 further increases the difficulty in the process of manufacturing the dual view field display panel.

Specifically, as shown in Fig. 2, a method for manufacturing the dual view field display panel in the prior art includes the following steps.
Step 1: forming the first substrate 101. For example, a color filter is formed on a substrate by a known process to form a color filter substrate, so that the first substrate 101 is obtained.
Step 2: forming a second substrate 102. For example, an array of thin film transistors is formed on another substrate by a known process to obtain the second substrate 102.
Step 3: forming the liquid crystal display panel 1. For example, the first substrate 101 and the second substrate 102 are combined to obtain a large size panel which is then cut into a plurality of small panels having desired sizes. Next, liquid crystals are injected into each of the small panels to form a liquid crystal layer 120. Then, a liquid crystal injection inlet is closed. Thus, the liquid crystal display panel 1 is obtained.
Step 4: thinning the fist substrate 101. For example, in a case where the first substrate 101 is a glass substrate, the present step includes: cutting the fist substrate 101 into glass sub-plates; preparing a protection fixture and a thinning equipment for the glass sub-plates; and performing a thinning treatment on the glass sub-plates, wherein, it may be necessary to transport the glass sub-plates after they have been subjected to the thinning treatment, which will increase time and cost of the step of thinning.
Step 5: forming the slit grating 2; and
Step 6: attaching the slit grating 2, i.e., aligning and attaching the slit grating 2 to the outer side of the first substrate 101 of the liquid crystal display panel 1.

Therefore, it is a technical problem to be solved urgently by a person skilled in the art to reduce the difficulty in the process of manufacturing the dual view field display panel under the condition that the display effect of the dual view field display panel is guaranteed.

### SUMMARY OF THE INVENTION

In view of the foregoing, the present invention provides a dual view field display panel, a method for manufacturing the same, and a display device, to reduce the difficulty in the process of manufacturing the dual view field display panel.

Therefore, the present invention provides a dual view field display panel including a first substrate and a second substrate which are arranged opposite to each other, the first substrate being located at a light outgoing side of the dual view field display panel, and the dual view field display panel including first display regions and second display regions which are arranged alternately, wherein,
a grating structure is provided on the first substrate at a side which faces towards the second substrate;
first display units corresponding to the first display regions and second display units corresponding to the second display regions are provided between the grating structure and the second substrate; and
after passing through the grating structure, light emitted from the first display units is directed to a first view field in which only the first display regions are viewed, and after passing through the grating structure, light emitted from the second display units is directed to a second view field in which only the second display regions are viewed.

As compared with the method in which the grating structure is attached to the resultant liquid crystal display panel in the prior art, the dual view field display panel according to the present invention saves a process for grating attachment and a thinning treatment performed on the first substrate, simplifies the manufacturing procedure of the dual view field display panel, and reduces the difficulty in the process of manufacturing the dual view field display panel significantly, by providing the grating structure used for implementing dual view filed display on the first substrate at a side which faces towards the second substrate, i.e., providing the grating structure between the first substrate and the second substrate.

Specifically, in the dual view field display panel according to the present invention, the grating structure is a multi-layer slit grating structure, so as to facilitate control of an outgoing direction of the light.

Specifically, in the dual view field display panel according to the present invention, the multi-layer slit grating structure includes at least two light shading layers, and a first transparent spacer layer is provided between any two adjacent ones of the at least two light shading layers; and
each of the light shading layers has one light transmissive portion in a region corresponding to each of the first display regions, and has one light transmissive portion in a region corresponding to each of the second display regions; in the same first display region, a light transmissive portion which is closer to the first substrate shifts towards a direction of the first view field relative to a light transmissive portion which is farther away from the first substrate; and in the same second display region, a light transmissive portion which is closer to the first substrate shifts towards a direction of the second view field relative to a light transmissive portion which is farther away from the first substrate.

Specifically, in the dual view field display panel, the first view field is a left view region, and the second view field is a right view region.

Specifically, in the dual view field display panel, the light transmissive portions of the same light shading layer have the same light transmissive width.

Specifically, in the dual view field display panel, the light transmissive portions of the light shading layers have the same light transmissive width.

Specifically, in the dual view field display panel, the first transparent spacer layer has a thickness M1 which is not less than 1µm and not more than 35µm.

Specifically, the dual view field display panel further includes a second transparent spacer layer located between the grating structure and each of the first display units and between the grating structure and each of the second display units.

Specifically, the dual view field display panel further includes a color blocking layer which is located between the second transparent spacer layer and each of the first display units and between the second transparent spacer layer and each of the second display units, or located between the first substrate and the grating structure, or located in the grating structure and directly under the first transparent spacer layer which is close to the second transparent spacer layer.

Specifically, in the dual view field display panel, the second transparent spacer layer has a thickness M2 which is greater than 0 and not more than 35µm.

The present invention further provides a display device including the dual view field display panel according to an embodiment of the present invention.

The present invention further provides a method for manufacturing a dual view field display panel, including a step of forming a first substrate and a step of forming a second substrate; wherein the method further includes the following steps:
providing a grating structure at a side of the first substrate;
combining the first substrate and the second substrate to form the dual view field display panel, so that the first substrate and the second substrate are arranged opposite to each other, the side of the first substrate at which the grating structure is arranged faces towards the second substrate, the first substrate is located at a light outgoing side of the dual view field display panel, and the dual view field display panel includes first display regions and second display regions which are arranged alternately; and
providing first display units corresponding to the first display regions and second display units corresponding to the second display regions between the grating structure and the second substrate, so that after passing through the grating structure, light emitted from the first display units is directed to a first view field in which only the first display regions are viewed, and after passing through the grating structure, light emitted from the second display units is directed to a second view field in which only the second display regions are viewed.

Specifically, in the method, the step of providing the grating structure includes a step of configuring the grating structure as a multi-layer slit grating structure.

Specifically, in the method, the multi-layer slit grating structure includes at least two light shading layers, and the method further includes the following steps:
forming a first transparent spacer layer between any two adjacent ones of the at least two light shading layers; and
forming one light transmissive portion in a region of each of the light shading layers which corresponds to each of the first display regions and one light transmissive portion in a region of each of the light shading layers which corresponds to each of the second display regions; so that in the same first display region, a light transmissive portion which is closer to the first substrate shifts towards a direction of the first view field relative to a light transmissive portion which is farther away from the first substrate, and in the same second display region, a light transmissive portion which is closer to the first substrate shifts towards a direction of the second view field relative to a light transmissive portion which is farther away from the first substrate.

Specifically, in the method, the step of forming one light transmissive portion in a region of each of the light shading layers which corresponds to each of the first display regions and one light transmissive portion in a region of each of the light shading layers which corresponds to each of the second display regions includes a step of forming the light transmissive portions of the same light shading layers in such a way that they have the same light transmissive width.

Specifically, in the method, the step of forming one light transmissive portion in both a region of each of the light shading layers which corresponds to each of the first display regions and one light transmissive portion in a region of each of the light shading layers which corresponds to each of the second display regions includes a step of forming the light transmissive portions of the light shading layers in such a way that they have a same light transmissive width.

Specifically, in the method, the step of forming the first transparent spacer layer includes a step of forming the first transparent spacer layer in such a way that it has a thickness M1 which is not less than 1µm and not more than 35µm.

Specifically, any one of the above-described methods further includes a step of forming a second transparent spacer layer between the grating structure and each of the first display units and between the grating structure and each of the second display units.

Specifically, the method further includes:
a step of forming a color blocking layer, wherein, the color blocking layer is formed to locate between the second transparent spacer layer and each of the first display units and between the second transparent spacer layer and each of the second display units, or locate between the first substrate and the grating structure, or locate in the grating structure and directly under the first transparent spacer layer which is close to the second transparent spacer layer.

Specifically, in the method, the step of forming the second transparent spacer layer includes a step of forming the second transparent spacer layer in such a way that it has a thickness M2 which is greater than 0 and not more than 35µm.

### BRIEF DESCRIPTION OF THE DRAWINGS

Figs. 1 and 2 are schematic diagrams showing the structure of a dual view field display panel in the prior art;
Fig. 3 is a schematic diagram showing the structure of a dual view field display panel according to an embodiment of the present invention;
Fig. 4 is a schematic diagram showing the structure of a grating structure having two light shading layers according to an embodiment of the present invention; and
Fig. 5 is a schematic diagram showing the structure of a grating structure having three light shading layers according to another embodiment of the present invention.

### DETAILED DESCRIPTION OF THE EMBODIMENTS

Embodiments of the dual view field display panel, the method for manufacturing the same, and the display device according to the present invention will be described in detail below with reference to the drawings.

It should be noted that the shape and the thickness of each of film layers shown in the drawings are not drawn to scale, and are merely schematic illustration of the contents of the present invention.

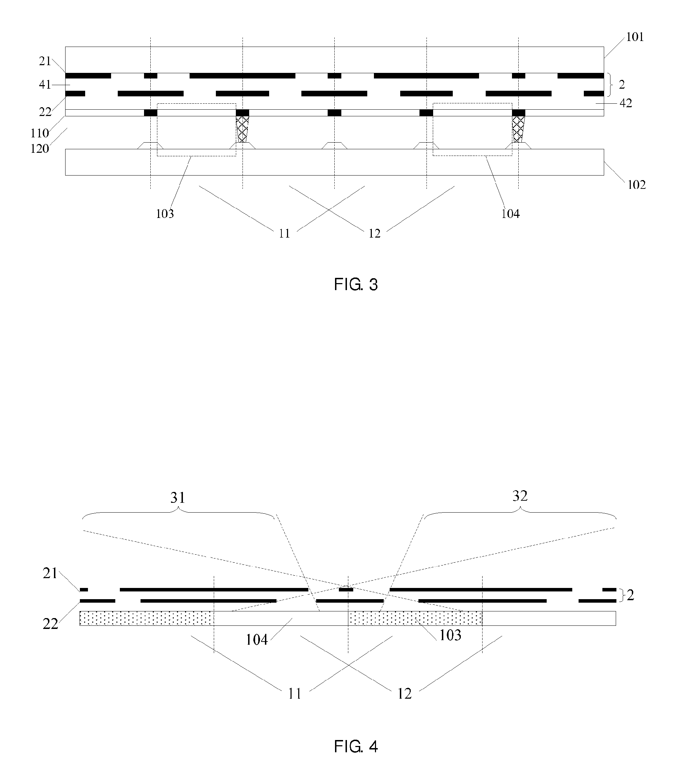

As shown in Fig. 3, an embodiment of the present invention provides a dual view field display panel, which includes a first substrate 101 and a second substrate 102 which are arranged opposite to each other. The dual view field display panel includes first display regions 11 and second display regions 12 which are arranged alternately.

A grating structure 2 is provided on the first substrate 101 at a side which faces towards the second substrate 102.

First display units 103 corresponding to the first display regions 11 and second display units 104 corresponding to the second display regions 12 are provided between the grating structure 2 and the second substrate 102.

As shown in Fig. 4, after passing through the grating structure 2, light emitted from the first display units 103 is directed to a first view field 31 in which only the first display regions 11 can be viewed, and after passing through the grating structure 2, light emitted from the second display units 104 is directed to a second view field 32 in which only the second display regions 12 can be viewed.

As a specific implementation, in the present embodiment, the first view field 31 generally refers to a left view region, and the second view field 32 generally refers to a right view region. The first substrate 101 generally refers to an upper substrate located at a light outgoing side of the display panel, and the second substrate 102 generally refers to a lower substrate which is on the display panel and opposite to the upper substrate.

The dual view field display panel according to an embodiment of the present invention may be a liquid crystal display panel of various modes, may be integrated into an organic electroluminescent display device, or integrated into another flat panel display device. It is not specifically limited herein.

In the dual view field display panel according to an embodiment of the present invention, the grating structure 2 used for achieving dual view filed display is provided on the first substrate 101 at a side which faces towards the second substrate 102, i.e., the grating structure 2 is provided between the first substrate 101 and the second substrate 102. As compared with the method in which it is required to attach a grating structure to a resultant display panel including a first substrate and a second substrate in the prior art, the dual view field display panel according to the present invention can save a process for grating attachment and a thinning treatment performed on the first substrate due to the fact that the grating structure is provided inside the display panel. Thus, the manufacturing procedure of the dual view field display panel is simplified, and the difficulty in the process of manufacturing the dual view field display panel is reduced significantly.

As a specific implementation, in the dual view field display panel according to the embodiment of the present invention, the grating structure may be a multi-layer slit grating structure in addition to a single-layer slit grating structure, so as to facilitate control of an outgoing direction of the light. That is, as shown in Fig. 3, the grating structure may include at least two light shading layers 21 and 22, and a first transparent spacer layer 41 is provided between any two adjacent ones of the at least two light shading layers. A second transparent spacer layer 42 may be further provided between the light shading layer 22 and a color blocking layer 110. As shown in Fig. 3, the grating structure 2 is located between a liquid crystal layer 120 and the first substrate 101. Specifically, positions of the grating structure 2 include the following three cases: the grating structure 2 is located between the color blocking layer 110 and the first substrate 101; the grating structure 2 is located between the liquid crystal layer 120 and the color blocking layer 110; and the second transparent spacer layer 42 and the light shading layer 22 of the grating structure 2 are located between the liquid crystal layer 120 and the color blocking layer 110, while the first transparent spacer layer 41 and the light shading layer 21 of the grating structure 2 are located between the color blocking layer 110 and the first substrate 101. In other words, the color blocking layer 110 is located between the second transparent spacer layer 42 and each of the first display units 103 and between the second transparent spacer layer 42 and each of the second display units 104, or located between the first substrate 101 and the grating structure 2, or located in the grating structure 2 and directly under the first transparent spacer layer 41 which is close to the second transparent spacer layer 42. For the latter two of the above three cases, each of the light shading layers 21 and 22 has a thickness of about 1µm, the color blocking layer 110 has a thickness of about 2µm, each of the first transparent spacer layer 41 and the second transparent spacer layer 42 has a thickness of about 30µm, and the spacer layers are generally formed of a high-viscosity fluid when being applied so that a planar surface can be formed, and further, there are many surface planarization processes after the spacer layers are cured, thus a thickness of the liquid crystal layer will not be affected. Wherein, each of the light shading layers 21 and 22 has one light transmissive portion in a region corresponding to each of the first display regions 11 and one light transmissive portion in a region corresponding to each of the second display regions 12. The light transmissive portion is a slit opening region of each of the light shading layers 21 and 22 as shown in Figs. 3 and 4.

For ease of implementation, preferably, the grating structure of the dual view field display panel according to an embodiment of the present invention has two or three light shading layers. Of course, the grating structure of the dual view field display panel according to the present invention is not limited thereto.

In order to ensure that light emitted from each display unit can be directed to a corresponding view region after it is subjected to modulation of each of the light shading layers, in the same first display region, a light transmissive portion which is closer to the first substrate shifts towards a direction of the first view field relative to a light transmissive portion which is farther away from the first substrate; and in the same second display region, a light transmissive portion which is closer to the first substrate shifts towards a direction of the second view field relative to a light transmissive portion which is farther away from the first substrate.

For example, in the grating structure having two light shading layers as shown in Fig. 4, the light shading layer 21 is farther away from the first display unit 103 and the second display unit 104 (i.e., is closer to the first substrate) than the light shading layer 22. Thus, in the same first display region 11, the light transmissive portion of the light shading layer 21 shifts towards a direction of the first view field 31 (i.e., the left side) relative to the light transmissive portion of the light shading layer 22; and in the same second display region 12, the light transmissive portion of the light shading layer 21 shifts towards a direction of the second view field 32 (i.e., the right side) relative to the light transmissive portion of the light shading layer 22.

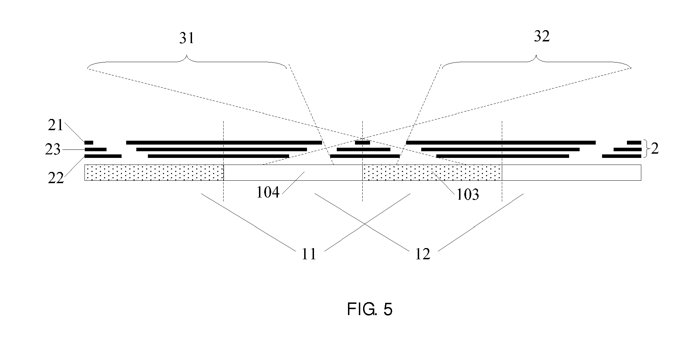

As another example, in the grating structure having three light shading layers as shown in Fig. 5, the light shading layer 21 is farther away from the first display unit 103 and the second display unit 104 (i.e., is closer to the first substrate) than the light shading layer 23, and the light shading layer 23 is farther away from the first display unit 103 and the second display unit 104 (i.e., is closer to the first substrate) than the light shading layer 22. Thus, in the same first display region 11, the light transmissive portion of the light shading layer 21 shifts towards a direction of the first view field 31

(i.e., the left side) relative to the light transmissive portion of the light shading layer 23, and the light transmissive portion of the light shading layer 23 shifts towards a direction of the first view field 31 (i.e., the left side) relative to the light transmissive portion of the light shading layer 22; and in the same second display region 12, the light transmissive portion of the light shading layer 21 shifts towards a direction of the second view field 32 (i.e., the right side) relative to the light transmissive portion of the light shading layer 23, and the light transmissive portion of the light shading layer 23 shifts towards a direction of the second view field 32 (i.e., the right side) relative to the light transmissive portion of the light shading layer 22.

Specifically, an outgoing direction of light emitted from the grating structure 2 can be controlled by several parameters as follows: a relative position of each of the light transmissive portions of each of the light shading layers relative to a corresponding display unit, a light transmissive width of each of the light transmissive portions of each of the light shading layers, and a distance between each of the light shading layers and the display units. During a design, a light outgoing angle as desired can be calculated by adjusting values of the above parameters.

As a specific implementation, the light transmissive portions of the same light shading layer are designed to have the same light transmissive width, so that brightness of light irradiated to the first view field and the second view field is relative uniform. Of course, the light transmissive portions may have different light transmissive widths. In a specific implementation, since the first view field and the second view field are respectively located at two sides of the dual view filed display panel and will not be viewed by the same viewer, a small fluctuation in light transmissive width will not affect a viewing effect of a viewer.

Further, for the purpose of ease implementation, the light transmissive portions of the light shading layers are designed to have the same light transmissive width. Of course, the light transmissive portions of the light shading layers may be designed to have different light transmissive widths. In a specific implementation, since the first view field and the second view field are respectively located at two sides of the dual view filed display panel and will not be viewed by the same viewer, a small fluctuation in light transmissive width will not affect a viewing effect of a viewer.

As a specific implementation, in the dual view field display panel according to the embodiment of the present invention, since the grating structure is embedded within the liquid crystal display panel, light emitted from the display units may be directly directed to a corresponding view region by the modulation of the grating structure without passing through the first substrate. As compared with the structure in which light emitted from the display units is directed to a corresponding view region after it firstly pass through the first substrate and then is subjected to the modulation of the grating structure in the prior art, a distance that the light travels from each of the display units to the grating structure is shorter. In the design of a display unit having a medium size and a display unit having a large size, the grating structure may be arranged directly on the display units. Whereas in the design of a display unit having a small size, in order to prevent light leakage among the display units, the second transparent spacer layer 42 may be provided between the grating structure 2 and each of the first display units 103 and between the grating structure 2 and each of the second display units 104, so as to achieve the purpose of adjusting the distance between the grating structure 2 and each of the first display units 103 and between the grating structure 2 and each of the second display units 104, as shown in Fig. 3. Thus, it is ensured that light will not leak out from the adjacent display unit.

Further, in the dual view field display panel according to an embodiment of the present invention, a distance between each of the light shading layers 21 and 22 and each of the first display units 103 and between each of the light shading layers 21 and 22 and each of the second display units 104 can be controlled, by adjusting the thickness of the first transparent spacer layer 41 between the two light shading layers 21 and 22 in the grating structure 2, and adjusting the thickness of the second transparent spacer layer 42 between the grating structure 2 and each of the first display units 103 and between the grating structure 2 and each of the second display units 104.

As a specific implementation, the first transparent spacer layer 41 preferably has a thickness M1 which is not less than 1µm and not more than 35µm, i.e., 1µm ≤ M1 ≤ 35µm; and the second transparent spacer layer 42 preferably has a thickness M2 which is greater than 0 and not more than 35µm, i.e., 0 < M1 ≤ 35µm.

Based on the same inventive concept, another embodiment of the present invention provides a display device, which includes any one of the dual view field display panels according to the above embodiments of the present invention. The display device may be any product or component having a display function, such as a mobile phone, a tablet computer, a television set, a display, a laptop computer, a digital photo frame, a navigator, and the like. Implementations of the display device can be referred to the above embodiments of the dual view field display panel, and detailed description thereof is omitted.

The present invention further provides a method for manufacturing the dual view field display panel, and as shown in Figs. 3 to 5, the method includes the following steps:
S1: forming the first substrate 101. For example, the first substrate 101 may be made of a glass material. Alternatively, a color filter is further formed on the substrate (e.g., a glass substrate) by a known process and with a known material to form a color filter substrate, so that the first substrate 101 is obtained;
S2: forming a second substrate 102. For example, an array of thin film transistors is formed on another substrate (e.g., a glass substrate) by a known process and with a known material to obtain the second substrate 102;
S3: providing a grating structure at a side of the first substrate. For example, respective layers of the grating structure may be formed sequentially through coating a material, forming a pattern, etching an unwanted pattern by known processes and with known materials. The present invention has no specific limitation to a process and a material for forming the grating structure;
S4: combining the first substrate 101 and the second substrate 102 to form the dual view field display panel, so that the first substrate 101 and the second substrate 102 are arranged opposite to each other, the side of the first substrate 101 at which the grating structure 2 is arranged faces towards the second substrate 102, the first substrate 101 is located at a light outgoing side of the dual view field display panel, and the dual view field display panel includes first display regions 11 and second display regions 12 which are arranged alternately; and
S5: providing first display units 103 corresponding to the first display regions 11 and second display units 104 corresponding to the second display regions 12 between the grating structure 2 and the second substrate 102, so that after passing through the grating structure 2, light emitted from the first display units 103 is directed to a first view field 31 in which only the first display regions 11 can be viewed, and after passing through the grating structure 2, light emitted from the second display units 104 is directed to a second view field 32 in which only the second display regions 12 can be viewed.

In the method, the step of providing a grating structure 2 includes a step of configuring the grating structure 2 as a multi-layer slit grating structure.

In the method, the multi-layer slit grating structure includes at least two light shading layers 21 and 22, and the method further includes:
a step of forming a first transparent spacer layer 41 between any two adjacent ones of the at least two light shading layers; and
a step of forming one light transmissive portion in a region of each of the light shading layers which corresponds to each of the first display regions 11 and one light transmissive portion in a region of each of the light shading layers which corresponds to each of the second display regions 12; so that in the same first display region 11, a light transmissive portion which is closer to the first substrate 101 shifts towards a direction of the first view field 31 relative to a light transmissive portion which is farther away from the first substrate 101, and in the same second display regions 12, a light transmissive portion which is closer to the first substrate 101 shifts towards a direction of the second view field 32 relative to a light transmissive portion which is farther away from the first substrate 101.

In the method, the step of forming one light transmissive portion in a region of each of the light shading layers which corresponds to each of the first display regions 11 and one light transmissive portion in a region of each of the light shading layers which corresponds to each of the second display regions 12 includes a step of forming the light transmissive portions of the same light shading layer in such a way that they have the same light transmissive width.

In the method, the step of forming one light transmissive portion in a region of each of the light shading layers which corresponds to each of the first display regions 11 and one light transmissive portion in a region of each of the light shading layers which corresponds to each of the second display regions 12 includes a step of forming the light transmissive portions of the light shading layers in such a way that they have the same light transmissive width.

In the method, the step of forming the first transparent spacer layer 41 includes a step of forming the first transparent spacer layer 41 in such a way that it has a thickness M1 which is not less than 1µm and not more than 35µm.

Any one of the above methods further includes a step of forming a second transparent spacer layer 42 between the grating structure 2 and each of the first display units 103 and between the grating structure 2 and each of the second display units 104.

The method further includes:
a step of forming a color blocking layer 110, wherein, the color blocking layer 110 is formed to locate between the second transparent spacer layer 42 and each of the first display units 103 and between the second transparent spacer layer 42 and each of the second display units 104, or locate between the first substrate 101 and the grating structure 2, or locate in the grating structure 2 and directly under the first transparent spacer layer 41 which is close to the second transparent spacer layer 42.

In the method, the step of forming the second transparent spacer layer 42 includes a step of forming the second transparent spacer layer 42 in such a way that it has a thickness M2 which is greater than 0 and not more than 35µm.

In each of the above methods, the layers may be formed sequentially through coating a material, forming a pattern, etching an unwanted pattern by a known process and with a known material. The present invention has no specific limitation to a process and a material for forming each of the layers.

In the dual view field display panel, the method for manufacturing the same, and the display device according to the present invention, a grating structure used for achieving dual view filed display is provided on a first substrate at a side which faces towards a second substrate, i.e., the grating structure is provided between the first substrate and the second substrate. As compared with the method in which it is required to attach a grating structure to a resultant liquid crystal display panel in the prior art, the dual view field display panel, the method for manufacturing the same, and the display device according to the present invention saves a process for grating attachment and a thinning treatment performed on the first substrate. Thus, the manufacturing procedure of the dual view field display panel is simplified, and the difficulty in the process of manufacturing the dual view field display panel is reduced significantly.

Obviously, various improvements and modifications to the present invention can be made by a person skilled in the art without departing from the spirit and scope of the present invention. These improvements and modifications also fall within the protection scope of the present invention.

## Claims

1. A dual view field display panel including a first substrate and a second substrate which are arranged opposite to each other, the first substrate being located at a light outgoing side of the dual view field display panel, and the dual view field display panel including first display regions and second display regions which are arranged alternately, wherein,
a grating structure is provided on the first substrate at a side which faces towards the second substrate;
first display units corresponding to the first display regions and second display units corresponding to the second display regions are provided between the grating structure and the second substrate; and
after passing through the grating structure, light emitted from the first display units is directed to a first view field in which only the first display regions are viewed, and after passing through the grating structure, light emitted from the second display units is directed to a second view field in which only the second display regions are viewed.

2. The dual view field display panel according to claim 1, wherein, the grating structure is a multi-layer slit grating structure.

3. The dual view field display panel according to claim 2, wherein, the multi-layer slit grating structure includes at least two light shading layers, and a first transparent spacer layer is provided between any two adjacent ones of the at least two light shading layers; and
each of the light shading layers has one light transmissive portion in a region corresponding to each of the first display regions and one light transmissive portion in a region corresponding to each of the second display regions; in the same first display region, a light transmissive portion which is closer to the first substrate shifts towards a direction of the first view field relative to a light transmissive portion which is farther away from the first substrate; and in the same second display region, a light transmissive portion which is closer to the first substrate shifts towards a direction of the second view field relative to a light transmissive portion which is farther away from the first substrate.

4. The dual view field display panel according to claim 3, wherein, the first view field is a left view region, and the second view field is a right view region.

5. The dual view field display panel according to claim 3 or 4, wherein, the light transmissive portions of the same light shading layer have the same light transmissive width.

6. The dual view field display panel according to claim 3 or 4, wherein, the light transmissive portions of the light shading layers have the same light transmissive width.

7. The dual view field display panel according to any one of claims 3 to 6, wherein, the first transparent spacer layer has a thickness M1 which is not less than 1µm and not more than 35µm.

8. The dual view field display panel according to any one of claims 1 to 7, further including a second transparent spacer layer located between the grating structure and each of the first display units and between the grating structure and each of the second display units.

9. The dual view field display panel according to claim 8, further including a color blocking layer which is located between the second transparent spacer layer and each of the first display units and between the second transparent spacer layer and each of the second display units, or located between the first substrate and the grating structure, or located in the grating structure and directly under the first transparent spacer layer which is close to the second transparent spacer layer.

10. The dual view field display panel according to claim 8, wherein, the second transparent spacer layer has a thickness M2 which is greater than 0 and not more than 35µm.

11. A display device including the dual view field display panel according to any one of claims 1 to 10.

12. A method for manufacturing a dual view field display panel, including a step of forming a first substrate and a step of forming a second substrate; wherein the method further includes the following steps:
providing a grating structure at a side of the first substrate;
combining the first substrate and the second substrate to form the dual view field display panel, so that the first substrate and the second substrate are arranged opposite to each other, the side of the first substrate at which the grating structure is arranged faces towards the second substrate, the first substrate is located at a light outgoing side of the dual view field display panel, and the dual view field display panel includes first display regions and second display regions which are arranged alternately; and
providing first display units corresponding to the first display regions and second display units corresponding to the second display regions between the grating structure and the second substrate, so that after passing through the grating structure, light emitted from the first display units is directed to a first view field in which only the first display regions are viewed, and after passing through the grating structure, light emitted from the second display units is directed to a second view field in which only the second display regions are viewed.

13. The method according to claim 12, wherein, the step of providing the grating structure includes a step of configuring the grating structure as a multi-layer slit grating structure.

14. The method according to claim 13, wherein, the multi-layer slit grating structure includes at least two light shading layers, and the method further includes the following steps:
forming a first transparent spacer layer between any two adjacent ones of the at least two light shading layers; and
forming one light transmissive portion in a region of each of the light shading layers which corresponds to each of the first display regions and one light transmissive portion in a region of each of the light shading layers which corresponds to each of the second display regions; so that in the same first display region, a light transmissive portion which is closer to the first substrate shifts towards a direction of the first view field relative to a light transmissive portion which is farther away from the first substrate, and in the same second display region, a light transmissive portion which is closer to the first substrate shifts towards a direction of the second view field relative to a light transmissive portion which is farther away from the first substrate.

15. The method according to claim 14, wherein, the step of forming one light transmissive portion in a region of each of the light shading layers which corresponds to each of the first display regions and one light transmissive portion in a region of each of the light shading layers which corresponds to each of the second display regions includes a step of forming the light transmissive portions of the same light shading layer in such a way that they have the same light transmissive width.

16. The method according to claim 14, wherein, the step of forming one light transmissive portion in a region of each of the light shading layers which corresponds to each of the first display regions and one light transmissive portion in a region of each of the light shading layers which corresponds to each of the second display regions includes a step of forming the light transmissive portions of the light shading layers in such a way that they have the same light transmissive width.

17. The method according to claim 14, wherein, the step of forming the first transparent spacer layer includes a step of forming the first transparent spacer layer in such a way that it has a thickness M1 which is not less than 1µm and not more than 35µm.

18. The method according to any one of claims 12 to 17, further including a step of forming a second transparent spacer layer between the grating structure and each of the first display units and between the grating structure and each of the second display units.

19. The method according to claim 18, further including
a step of forming a color blocking layer, wherein, the color blocking layer is formed to locate between the second transparent spacer layer and each of the first display units and between the second transparent spacer layer and each of the second display units, or locate between the first substrate and the grating structure, or locate in the grating structure and directly under the first transparent spacer layer which is close to the second transparent spacer layer.

20. The method according to claim 18, wherein, the step of forming the second transparent spacer layer includes a step of forming the second transparent spacer layer in such a way that it has a thickness M2 which is greater than 0 and not more than 35µm.
